# EUROPEAN PATENT SPECIFICATION

(11) **EP 4 357 764 B1**
(45) Date of publication and mention of the grant of the patent: **27.05.2026**
(21) Application number: 22202990.2
(22) Date of filing: 21.10.2022
(51) Int. Cl.: G01N 21/87

(54) **APPARATUS AND METHOD FOR THE SEPARATION OF SMALL DIAMONDS**
VORRICHTUNG UND VERFAHREN ZUR TRENNUNG VON KLEINEN DIAMANTEN
APPAREIL ET PROCÉDÉ DE SÉPARATION DE PETITS DIAMANTS

(43) Date of publication of application: 24.04.2024
(73) Proprietor: Swiss Gemmological Institute SSEF, 4051 Basel (CH)
(72) Inventor: KRZEMNICKI, Michael S., 4054 Basel (CH); Chalain, Jean-Pierre, 68100 Mulhouse (FR); Phan, Ly, 68390 Battenheim (FR); Xaysongkham, Julien, 68390 Sausheim (FR); Speich, Laura, 4053 Basel (CH); Remonnay, Emmanuel, 25130 Villers-le-Lac (FR); Cartier, Francis, 25210 Le Russey (FR); Pilorget, Thierry, 2400 Le Locle (CH); Bonin, Alexandre, 25570 Grand-Combe-Châteleu (FR)
(74) Representative: BOVARD AG

(56) References cited:
- EP-B1- 2 840 384
- WO-A1-2011/037481
- US-A- 5 193 685

## Description

### Technical field of the invention

The present invention relates to the technical field of gemstones, in particular diamonds. Present invention relates to an apparatus and a method for the authentication of small colourless polished natural diamonds.

For the purpose of the present invention, the term "colourless diamond" is to be understood as comprising all diamonds which show no distinct hue when observed table-side facing up. The term "small diamonds" is to be understood as diamonds having a mean diameter of less than about 3.8 mm.

### Background of the invention

It is only recently that a large amount of small synthetic diamonds emerged in the market. Prior to this, synthetic diamonds were much rarer as its high cost of mimicking real diamonds render such falsification activities not economically attractive.

Due to the mass production of small, colourless synthetic diamonds and diamond imitations, the demand for authenticating small natural diamonds has become high and thus led to the urgency to find an efficient and a low-cost apparatus as well as method to separate natural small diamonds from other stones (e.g., synthetic diamonds, diamond imitations).

In this connection, compared to coloured diamonds, colourless diamonds are particularly more appealing among consumers due to the fact that small colourless diamonds are heavily used in the field of watchmaking and jewellery. The watch and jewellery industries use large quantities of small, polished, colourless diamonds for their products. These small diamonds are cut and polished from rough material to be set into jewellery.

A diamond imitation (or also known as diamond simulant or imitation of diamond) is an object or material resembling a diamond. Diamond imitations are stones manufactured to look like diamonds but are compositionally different than diamonds. Diamond simulants, such as cubic zirconia or synthetic moissanite, look like diamonds but are not diamonds. Diamond imitations do not have the same chemical and physical properties as diamonds. In most cases, diamond imitations can be distinguished from natural or synthetic diamonds using only the naked eye due to their fiery sparkle.

Synthetic diamonds are distinct from diamond imitations in that they have the same physical and chemical properties as natural diamonds. They differ from natural diamond in that they are produced in a controlled technological process. Synthetic diamonds are pure carbon crystallized in an isotropic 3D form.

Patent EP 2840384 B1 which was filed by the same applicant as the present invention relates to a first of its kind of an apparatus and a method for automatically separating small colourless natural (untreated) diamonds from not only diamond imitations and synthetic diamonds, but also the separation of treated natural diamonds and treated synthetic diamonds. The apparatus of said patent is realised via a rotating disc (supporting means), whereby a batch of small diamonds are fed by a feeding means to the supporting means where the diamonds are placed one by one to a set of orientation chicanes. Diamonds which are not correctly oriented will be deviated to an inner orbit for reaching a chicane which sends them back to the set of orientation chicanes. The correctly oriented diamonds are then submitted to a Raman Shift Detection (RSD) and followed by a UVc transmission measurement in order to sort the diamonds according to their signatures.

The inventors of said patent soon realised that there are several less optimal features in said apparatus. One being that the apparatus requires a huge space for installation, as said automatic separating apparatus requires the use of a rotating disc as a supporting means. Rotating disc is generally preferred as it is a standard component used for distancing gemstones before gemstones can be subjected for identification. Said type of supporting means unavoidably requires a large surface area. In general, such apparatus as described in said patent weighs about at least 400 kg, thus making installation and relocation very challenging. Therefore, there are demands for much smaller size of an automatic sorting apparatus such as a table size in the diamond industry. However, as certain surface area is required for distancing the stones, therefore the rotating disc cannot be simply reduced to any desired reduced size.

Moreover, it is noticed that when the size of the diamonds is too small (e.g., the mean diameter is approximately 1 mm or less), the apparatus described in EP 2840384 B1 does not always perform in a reliable and optimum manner because the small diamonds may tend to stick or aggregate together due to phenomena such as electrostatic charge. Hence, a new sorting technique which does not involve the use of chicanes is envisaged. Furthermore, the short-wave UVc transmission measurement described in the aforementioned patent may not always be a reliable method to separate such small (e.g., less than 1 mm) synthetic diamonds from the natural ones.

Hence, a new yet smaller size apparatus as well as a new method which are able to automatically sort melee batches of small diamonds are foreseen.

### Summary of the invention

The inventors of the present invention propose a new apparatus and a method as claimed presently for automatically sorting and authenticating batches of small, colourless natural diamonds from diamonds imitations and synthetic diamonds. The apparatus according to the present invention is compact (e.g., less than 100 kg) as it eliminates the use of a rotating plate which traditionally is a preferred sorting technique in the field of gemstones to sort out gemstones. Moreover, thanks to the transportation means of the present invention, the identified diamond (which has fulfilled the criteria e.g., table down position upon the successful identification by the first detection means) can be picked up and inspected by a second detection means, thus eliminating the need of a rotating disc having a large surface area.

Moreover, diamonds (or stones) which are far smaller than 3.8 mm, for instance around 1 mm which may pose as a challenge to the apparatus described in EP 2840384 B1 is now overcome thanks to the transportation means which is capable of picking up a single stone. As only a single stone is being picked up, the phenomenon of aggregation or "sticking together" of small diamonds can be overcome. Thanks to the transportation means of the present invention designed to carry small gemstones, small diamonds less than about 1 mm, or between 0.30 mm to 3.8 mm are picked and placed instead of through rotating disc. Moreover, the new and inventive authenticating method also allows the authentication of the aforementioned small stones.

As explained above, the inventors have improved not only the apparatus but also the method as compared to the previous generation. For instance, the short-wave UVc transparency which is used in the previous generation's apparatus is not a robust method to separate colourless natural diamonds from the "refer" stones, i.e., whether the stone is a natural diamond or a synthetic diamond is undetermined; the term "refer" means diamonds that need further testing. In this context, the diamonds are referred to small e.g., smaller than 3.8 mm or less than 1 mm, or between 0.3 mm and 1 mm.

In a first aspect, it is proposed an apparatus for automatically sorting small colourless natural diamonds from colourless diamond imitations and colourless synthetic diamonds, wherein the diamonds are generally polished and have a mean diameter of less than 3.8 mm, the apparatus comprising
- A collecting vibrating vessel where the diamonds are being fed thereto, comprising a vibrating plate for jolting the diamonds;
- A first detection means for detecting the position of the diamonds, wherein at least one diamond having a table down position is determined;
- A second detection means for submitting the diamond to a first test of a Raman Shift Detection or a Photoluminescence Detection, followed by a second test of a Raman Shift Detection or a Photoluminescence , the second test having a different laser wavelength than the first test;
- A transportation and sorting out means for picking up the diamond having a table down position, placing the diamond to the second detection means**,** and thereafter sorting out the diamond to a respective container.

In a second aspect, it is proposed a method of automatically sorting small colourless natural diamonds from colourless diamond imitations and colourless synthetic diamonds, wherein the small diamonds are generally polished and have a mean diameter of less than 3.8 mm, comprising the steps of
- Providing a batch or lot of diamonds to be inspected onto a collecting vibrating vessel comprising a vibrating plate;
- Jolting the vibrating plate to position randomly the diamonds;
- Submitting the diamond to a first detection means for detecting the positions of the diamonds, and determining at least one diamond having a table down position;
- Picking up the identified diamond having table down position;
- Submitting the diamond to a second detection means, comprising a first test of a Raman Shift Detection or a Photoluminescence Detection, followed by a second test of a Raman Shift Detection or a Photoluminescence Detection, the second test having a different laser wavelength than the first test, wherein when the first test and the second test are Raman Shift Detections, the diamond is further submitted to a third test of Photoluminescence Detection;
- Sorting the diamond to a respective container.

According to some embodiments, the apparatus further comprises a supporting means for supporting the transportation means, allowing the transportation means to move substantially vertically along the supporting means.

In some preferred embodiments, the apparatus further comprises a moving mechanism provided to a supporting means for supporting the transportation means, allowing the supporting means to move in a linear motion.

In yet some preferred embodiments, the transportation means comprises an arm that is rotatable around a central axis of the supporting means. This gives a further degree of movement such that the transportation means is capable of reaching different locations.

In other embodiments, the transportation means is provided with an end means for carrying a diamond having a size of about 0.45 mm or less, preferably a suction means. For instance, the end means comprise a suction-like means or a tweezer-like element. The suction-like means e.g., vacuum suction may be a preferred option as it allows the stone to be carried or "grabbed" on its pavilion side while the table side of the stone can be irradiated by the laser light.

According to some embodiments, an end means is provided to an arm of the transportation means such that the diamond is carried through clamping, gripping, suction, scooping and/or magnetic.

According to some embodiments, the transportation means is extendible and retractable. This allows the transportation means to reach small diamonds situated at different locations of the vibrating plate, or different sorting bins or containers.

According to some embodiments, the first detection means comprises an imaging system for capturing and processing images for identifying the diamond to be picked up. For instance, a camera is provided to the first detection means, wherein the camera may be provided on top of the vibrating plate to capture images of the diamonds. An imaging system may then analyse the random orientation of the diamonds and identify at least one diamond having a table down position.

According to some embodiments, the first detection means comprises an imaging system for capturing and processing images of the random orientation of the diamonds, wherein a diamond having a table down position is selected to be picked up based on the density of the diamonds and/or the number of the diamonds within the image.

According to some embodiments, the diamond subjected to the second detection means is first submitted to a first test of a Raman Shift Detection (RSD) or Photoluminescence Detection (PL) having a longer wavelength, followed by a second test of a Raman Shift Detection (RSD) or Photoluminescence Detection (PL) having a shorter wavelength, or vice versa.

According to some embodiments, the diamond subjected to the second detection means is submitted to a first test which is a Raman Shift Detection or a Photoluminescence Detection, having more than 500 nm wavelength followed by a second test which is a Raman Shift Detection or Photoluminescence Detection (32b) having less than 500 nm wavelength, or vice versa.

According to some embodiments, the diamond subjected to the second detection means is first submitted to a first test of Raman Shift Detection having a longer wavelength, followed by a second test of Raman Shift Detection having a shorter wavelength, or vice versa, and followed by a third test of Photoluminescence Detection, or preferably, the diamond subjected to the second detection means is first submitted to a first test of Raman Shift Detection having a wavelength of more than 500 nm and the second test of Raman Shift Detection having a wavelength of less than 500 nm, or vice versa, and followed by a third test of Photoluminescence Detection.

According to some embodiments, the diamond subjected to the second detection means is submitted to a first test which is a first Raman Shift Detection followed by a second test of a photoluminescence detection (PL), or vice versa.

According to some embodiments, the diamond subjected to the second detection means is submitted to a first test which is a Photoluminescence Detection, and followed by a second test which is a Raman Shift Detection, or vice versa.

According to some embodiments, the identified diamond is picked up based on the density of the diamond and/or the number of diamonds within an image. This has the advantage to avoid having too many diamonds located within the vibrating plate where the phenomenon of aggregation may occur.

The term "small diamonds" as used herein refers diamonds having a mean diameter of about 3.8 mm or less. The mean diameter of a diamond is defined at the level of its girdle and is expressed in millimetre. The apparatus of the present invention is suitable to handle small diamonds for example having a mean diameter of from about 0.30 mm to about 3.8 mm, or between about 0.45 mm to 3.5 mm, or preferably between 0.30 mm to 1 mm.

The term "colourless" as used herein refers to all diamonds which show no distinct hue when observed table-side facing down.

The term "about" or "around" or "approximately" as used herein in relation to a given numerical value, it is meant to include numerical values within 10% of the specified value. All values given in the present disclosure are to be understood to be complemented by the word "about" unless it is clear to the contrary from the context. In a stricter sense, it is meant to include numerical values within 5% of the specified value.

The term "round" or "round cut" as used herein refers to diamonds which have been cut and processed. It does not have to be strictly round in shape but simply means that the diamonds have been round cut or brilliant cut.

The term "polished" refers to the degree of smoothness of each facet of a diamond as observed by a gemmologist. Nevertheless, when a diamond is cut and polished, microscopic surface defects may still be created by the polishing wheel as it drags tiny, dislodged crystals across the diamond's surface.

The term "stone" refers generally to (a) roundish, polished colourless diamond or; (b) roundish, polished colourless synthetic diamond or; (c) roundish, polished colourless diamond imitation.

The term "refer" described in the method section or in the stone authentication meant further testing.

The term "refer rate" as used herein refers to the total number of natural and synthetic diamonds unseparated by the apparatus, divided by the total number of stones submitted to the apparatus. In present, the refer rate on a "normal" batch of natural diamonds is approximately 2 %.

The term "table down" refers to the table side of the diamond is facing down i.e., facing the surface of a table for instance while the pavilion side of the diamond is facing to the top.

### Brief description of the drawings

Figure 1A is a front view of the apparatus according to an embodiment of the present invention.
Figure 1B is a top view of the apparatus according to the embodiment shown in the Figure 1A.
Figure 1C is a top view of the apparatus according to the embodiment shown in the Figure 1A.
Figure 2 is a schematic representative of an image produced by the first detection means for identifying the random orientation of the diamonds.
Figure 3 is a diamond stone having a table down position and is irradiated during the second detection means.

### Detail description of the invention

Several preferred embodiments of the present invention will now be described in detail with reference to the accompanying drawings. In the following description, a detailed description of known functions and configurations incorporated herein has been omitted for conciseness. To this end, it is pointed out that different features from different embodiments can be selected to be combined together within capability of a skilled person in the art.

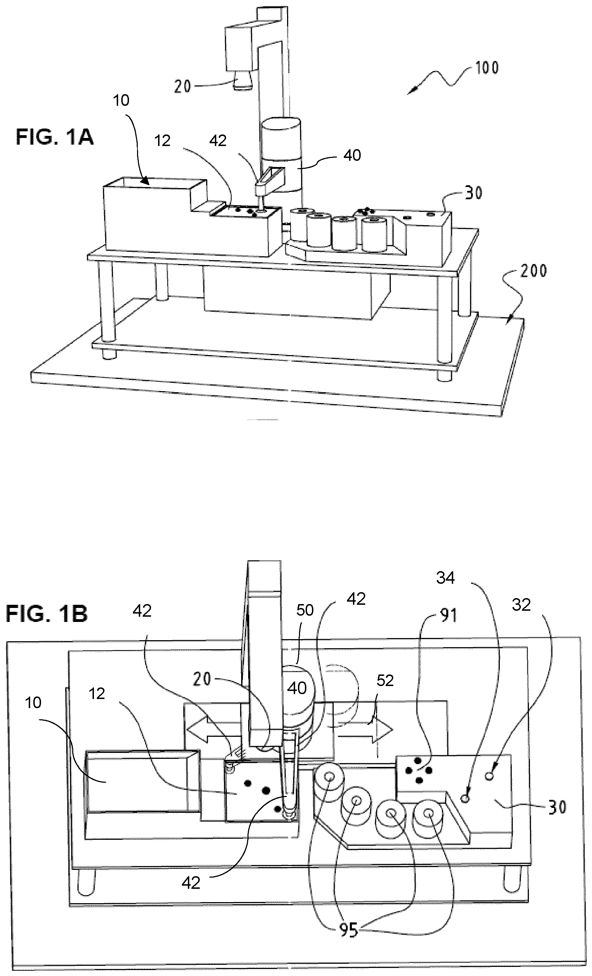

Figure 1A shows an embodiment of the apparatus 100. The apparatus 100 is a compact size apparatus which is suitable to be placed on a desk 200 for instance. This allows an easy installation as well as relocation when needed. The apparatus as shown in the Figure 1A comprises a collecting vibrating vessel 10, a first detection means 20, a second detection means 30 and a transportation means 40.

The starting product, usually a batch of small colourless diamonds (or simply known as stones), which may comprise of real diamonds, synthetic diamonds, and diamond imitations, having a size ranging from about 0.3 mm to 3.80 mm, preferably pre-sorted by diameters ± 0.05 mm, is introduced into a collecting vibrating vessel 10 before being transferred to a vibrating plate 12. Through controlled slight vibrations, a small part of the stone batch in collecting vibrating vessel 10 is directed to the vibrating plate 12. A separator may be provided in between the collecting vibrating vessel 10 and the vibrating plate 12 in order to limit the number of the diamonds falling into the vibrating plate 12. The vibrating plate 12 may have a translucent surface and back illuminated to enable clear vision and image capturing.

As demonstrated in the Figure 1B which is a top view of the apparatus, a first detection means 20, comprising an imaging system (such as CCD (charge-couple device) Camera) for the purpose of capturing and processing the images in order to identify diamonds having a table down position. These correctly oriented diamonds are selected such that they can be submitted for a second detection means 30 for analyses.

Figure 1B shows an embodiment of the invention 100 that the transportation means 40 is capable of moving in at least one longitudinal position (first-degree movement). For example, the transportation means 40 is capable of moving from a position from the first detection means 20 to a position where the stones are being sorted (sorting position). By providing an additional structure such as a precise robotic arm 42, a second-degree or further movements can be realised. As an example, the robot's precision of the "x,y coordination" is able to distinguish a distance of about 5 microns.

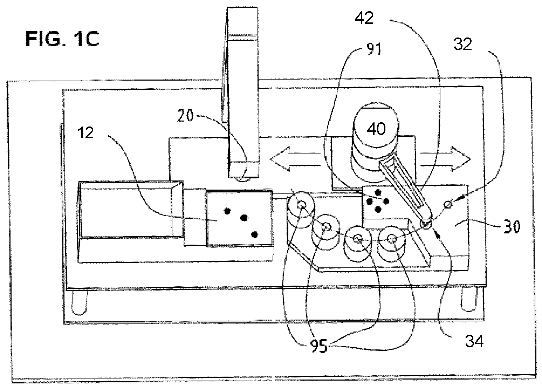

Figure 1C shows an embodiment of the invention that the transportation means 40 reaches a "sorting position" (close to the calibration holder 91), the arm 42 rotates around the vertical central axis of the transportation means 40 in order to sort the stones according to their signatures to their respective containers, such as (a) diamond simulant/imitation (b) "refer" (which the stones are most likely synthetic diamonds) (c) natural diamond (d) not analysed.

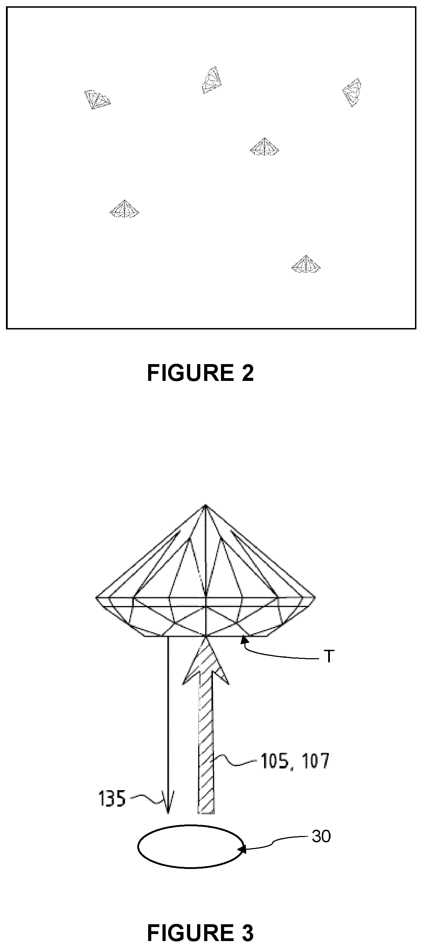

Figure 2 shows an example of six diamonds (or stones) that are located on the vibrating plate 12, where the vibrating plate 12 is vibrated or jolted in such a way that the position of the diamonds is randomly oriented. Due to the shape of the cut and polished diamonds, they tend to self-orientate themselves into a table-side facing down position T (table down position), as demonstrated in the Figure 3. In other words, the largest flat surface area of the diamond is in contact with the surface of a table whereas the tipping end of the diamond is on the opposite end.

The first detection means 20 comprises an imaging system, wherein an algorithm is provided to analyse the positions of the small diamonds. Only the correctly positioned stones (such as the table down position T as demonstrated in Figure 3) will be picked up by the transportation means 40 before carrying the identified stone to the second detection means 30. Stones which are not correctly oriented will be subjected to further rounds of vibrations. In other words, after each round, or several rounds of vibrations, an image will be made to capture and process the randomly oriented stones, wherein only the stones with a table down position will be identified, and picked up by the transportation means 40, before a new round of vibration is applied to the vibrating plate 12 to jolt the remaining stones to reach the table down position.

As an example, a first algorithm assigns an order range and a respective "x,y" coordinates to stones that is "correctly" oriented table-down. The order ranges and "x,y" coordinates are transmitted to the robot. Then, a pick and place precise robotic arm picks a first, a second, a third etc. table down stone at its corresponding "x,y" coordinates. After the pick and place precise robotic arm has picked all table-down stones, the back-illuminated vibrating plate 12 applies a slight vertical "jump" or "jolt" to the remaining stones which places some more stones to be correctly oriented table-down so that the imaging steps are repeated until the process up to the last stone is picked up.

According to a further variant of the invention, the stones having a table down position may be selected to be picked up based on the density of the stones and/or the number of the stones within an image. When there are too many stones situated within an area, the high density of stones on a surface area may increase the difficulty of picking up a correctly positioned diamond having a table down position. Moreover, in case the stones are very small e.g., around 1 mm or less, they tend to aggregate together, making segregation even more challenging.

The transportation means 40 carries the identified stone (table down position stone) to a second detection means 30, which may subject the stone to undergo either one of the four detection options:
i) First Raman Shift Detection 32a and followed by Second Raman Shift Detection 34a; or
ii) First Raman Shift Detection 32a and followed by Photoluminescent Detection 34b; or
iii) Photoluminescent Detection 32b and followed by Second Raman Shift Detection 34a; or
iv) Photoluminescent Detection 32b and followed by Photoluminescent Detection 34b.

In this respect, it is disclosed that under the option (i), the diamond is further submitted to a third test of Photoluminescence Detection in the second detections means 30.

The option (ii) or option (iii) which is a first Raman Shift Detection 32a followed by a Photoluminescent Detection 32b, or vice versa, can be selected as a preferred option, although other options are not being excluded.

The transportation means 40 may hold the stone similarly on a table down position. For example, a suction means can be provided to the transportation means 40 such that the stones can be picked up through vacuum suction.

In one specific embodiment, the stone may for instance be subjected to a first test 32 of a Raman Shift Detection 32a followed by a second test 34 of another Raman Shift Detection 34a, having two different wavelengths ranging between e.g., 351 nm and 590 nm. The first Raman Shift Detection 32a comprises a wavelength higher than the second Raman Shift Detection 34a. For instance, the wavelength of the first Raman Shift Detection 32 is higher than about 500 nm while the second Raman Shift Detection 34 is lower than about 500 nm. Under such conditions, a third test of Photoluminescence Detection (PL) is further employed in the second detection means (30).

Advantageously, the stone is first submitted to the first test 32 of a Raman Shift Detection 32a where its Raman shift is measured in a wavelength range of between 565 nm and 575 nm for instance. In particular, their Raman shift (emission) signal is observed at a wavelength of 572.6 nm, which is the characteristic Raman shift wavelength Wₑ of natural or synthetic diamond when using an excitation wavelength of 532 nm. In addition, as an example, a reference signal may also be observed at a different wavelength, for example between 555 nm and 565 nm. The use of two such signals allow to reduce background signals and therefore improves the measurement results.

When the intensity of the calculated signal of a stone at the predetermined wavelength Wₑ is lower than a predetermined value used as a discard threshold, it is considered that the stone is a diamond imitation (or diamond simulant) and will be removed. In other words, a second algorithm is provided to fit with the presence or absence of the stone's Diamond Raman Peak (DRP, located at 1332 cm-1 of the wavelength of the laser). If the algorithm fails to fit the DRP then the stone is reputed as "diamond simulant", and therefore the stone will be sorted to the designated container 95 e.g., "diamond simulant". If the algorithm fits the DRP, the stone is reputed as either "natural diamond" or "synthetic diamond". Under such circumstance, the transportation means 40 will carry said stone to the second test 34 (or further to a third test, or a further test) of the second detection means 30.

In other words, when the stone passes the first test 32 e.g., the first Raman Shift Detection 32a (i.e., stone is not diamond simulant but may either be a natural diamond or a synthetic diamond), the transportation means 40 then carries the stone and holds said stone, similarly in a table down position, so that it is subjected to a second test e.g., second Raman Shift Detection 34a or photoluminescence detection 34b. As an example, a suitable laser wavelength of the second Raman Shift Detection 34 or photoluminescence detection 34b may be in the range of between about 400 nm and 500 nm.

The second test 34 of the second detection means 30 may use wavelength less than 500 nm for example to inspect the stone. Similarly, when the intensity of the calculated signal of a stone at the predetermined wavelength Wₑ is lower than a predetermined value used as a discard threshold, it is considered that the stone may either be a natural diamond or a synthetic diamond, and therefore must be removed to a specific bin. In this case, the transportation means 40 will carry said stone and place it into one the designated containers 95 (e.g., "refer" container). When the stone passes both the first and second tests (32, 34), said stone will then be placed in another designated container 95 (e.g., container for natural diamonds).

A further algorithm can be employed which is directed to detect photoluminescence (PL) features of the stones by using different suitable wavelengths (e.g., 986.1 nm, 946 nm, 885 nm, 883/884 nm, 824 nm, 824/826 nm, 797 nm, 794 nm, 767 nm, 756 nm, 741 nm, 737 nm, 720 nm , 710 nm, 701 nm, 694 nm, 694/700 nm, 692/693 nm, 681 nm, 676 nm, 658 nm, 651 nm, 650 nm, 648 nm, 638 nm, 637 nm, 619/620 nm, 617 nm, 602 nm, 596 nm, 596/597 nm, 585 nm, 575 nm, 563 nm, 553 nm, 523 nm, 503 nm, 499 nm, 497 nm, 496 nm, 481 nm, 482 nm, 467 nm, 454 nm, 431 nm, 423 nm, 421 nm, 418 nm, 415 nm, 412 nm, 410 nm, 406 nm, 405 nm, 403 nm, 401 nm, 400 nm, 398 nm, 396 nm, 389 nm) in order to differentiate a natural diamond from a "refer" stone. In a further example, a stone that has been identified not being a simulant stone is then subjected to a second test of photoluminescence detection (PL) in order to identify whether the stone is a natural stone, or should be placed into a "refer" container.

In some instance when the stones cannot be read and analysed properly, the transportation means 40 will then transfer said stone into a yet another designated container (e.g., not successfully analysed container) so that different analyses can be taken place to ascertain the identity of said stone.

It goes without saying that a fourth algorithm which could give orders to the robot to deliver the stone in its respective container can be provided to the apparatus and the method of the present invention, e.g., stone reputed as "diamond simulant/imitation", stone reputed as "natural diamond", stone reputed as "refer", or stone reputed as "not analysed".

Of course, the present invention is not only provided with analytical parameters but also a calibration method in order to calibrate the detection means 30 (e.g., first test 32 and second test 34) before running a cycle of analysis. For instance, as can be seen in the Figure 1B, the second detection means 30 is calibrated where the transportation means 40 picks up the calibration stones from the calibration holders 91 before submitting the identified stone for Raman measurement.

As an example, in the calibration cycle, a diamond of reference with known signals of interests is picked (e.g., through suction by a nozzle of the arm of the robot, and followed by placing alternatively in front of the two system of analysis/lasers. The respective signals of this diamond of reference as measured during this calibration step are compared with their known signals. Should these signals be approximately equal to the known signals, the calibration of the apparatus would be considered acceptable for a cycle of analysis. An operator can always run a calibration cycle whenever needed.

To this end, it is noted that in the previous generation's apparatus, the detected signals were analysed by a so-called "fast filter method". When applying this treatment of the signals in the apparatus of the present invention, it is noted that the sorting method is fast, however the refer rate is rather high (approximately 6%) which is less optimal. As the refer rate is sensitive for the reliability of the apparatus, therefore the fast filter method employed in the previous generation is replaced by a specific Spectral Fitting or Peak Detection Algorithm of the present case, which is slower than the fast filter method (of the previous generation) but could reach a much lower and acceptable refer rate (approximately 2%) is realised in the present case. The term "refer rate" as used herein refers to the total number of natural and synthetic diamonds unseparated by the apparatus, divided by the total number of stones submitted to the apparatus. The refer rate on a "normal" batch of natural diamonds should usually be approximately 2% or less. The specific Spectral Fitting or Peak Detection Algorithm may be applied on the detection of a Diamond Raman Shift (DRP) Peak and/or on a Photoluminescence (PL) Peak.

To this end, it is disclosed that a very small percentage of natural diamonds may eventually be found in the container 95 labelled with "refer" as those natural diamonds do not show one of the peaks listed above (see page 6, line 5). For this reason, it may be necessary for the stones inside the "refer" container 95 for further testing, such as (low temperature) photoluminescence detection, or even phosphorescence testing.

## Claims

1. An apparatus (100) for automatically sorting small colourless natural diamonds from colourless diamond imitations and colourless synthetic diamonds, wherein the diamonds are generally polished and have a mean diameter of less than 3.8 mm, the apparatus comprising
- A collecting vibrating vessel (10) where the diamonds are being fed thereto, comprising a vibrating plate (12) for jolting the diamonds;
- A first detection means (20) for detecting the position of the diamonds, wherein at least one diamond having a table down position is determined;
- A second detection means (30) for submitting the diamond to a first test (32) of a Raman Shift Detection (32a) or a Photoluminescence Detection (32b), followed by a second test (34) of a Raman Shift Detection (34a) or a Photoluminescence Detection (34b), the second test (34) having a different laser wavelength than the first test (32);
- A transportation and sorting out means (40) for picking up the diamond having a table down position, placing the diamond to the second detection means (30), and thereafter sorting out the diamond to a respective container (95).

2. The apparatus (100) according to claim 1, wherein the first detection means (20) comprises an imaging system for capturing and processing images for identifying the diamond to be picked up.

3. The apparatus (100) according to any one of the preceding claims, wherein the diamond subjected to the second detection means (30) is first submitted to a first test of a Raman Shift Detection (32a) or Photoluminescence Detection (32b) having a longer wavelength, followed by a second test (34) of a Raman Shift Detection (34a) or Photoluminescence Detection (34b) having a shorter wavelength, or vice versa.

4. The apparatus (100) according to any one of the preceding claims, wherein the diamond subjected to the second detection means (30) is submitted to a first test (32) which is a first Raman Shift Detection (32a) or Photoluminescence Detection (32b) having more than 500 nm wavelength followed by a second test (34) which is a second Raman Shift Detection (34a) or Photoluminescence Detection (34b) having less than 500 nm wavelength, or vice versa.

5. The apparatus (100) according to any one of the preceding claims, wherein the diamond subjected to the second detection means (30) is submitted to a first test (32) which is Photoluminescence Detection (32b), and followed by a second test (34) which is a Raman Shift Detection (34a).

6. The apparatus (100) according to any one of the preceding claims, further comprising a supporting means (50) for supporting the transportation means (40), allowing the transportation means (40) to move substantially vertically along the supporting means (50).

7. The apparatus (100) according to any one of claims 1-5, further comprising a moving mechanism (52) provided to a supporting means (50) for supporting the transportation means (40), allowing the supporting means to move in a linear motion.

8. The apparatus (100) according to one of claims 6 or 7, wherein the transportation means (40) comprises an arm (42) that is rotatable around a central axis of the supporting means (50).

9. The apparatus (100) according to any one of the preceding claims, wherein the transportation means (40) is provided with an end means for carrying a diamond having a size of about 0.45 mm or less, preferably a suction means.

10. The apparatus (100) according to any one of claims 1-8, wherein an end means is provided to an arm (42) of the transportation means (40) such that the diamond is carried through clamping, gripping, suction, scooping and/or magnetic.

11. The apparatus (100) according to any one of the preceding claims, wherein the transportation means (40) is extendible and retractable.

12. A method of automatically sorting small colourless natural diamonds from colourless diamond imitations and colourless synthetic diamonds, wherein the small diamonds are generally polished and have a mean diameter of less than 3.8 mm, comprising the steps of
- Providing a batch or lot of diamonds to be inspected onto a collecting vibrating vessel (10) comprising a vibrating plate (12);
- Jolting the vibrating plate (12) to position randomly the diamonds;
- Submitting the diamond to a first detection means (20) for detecting the positions of the diamonds, and determining at least one diamond having a table down position;
- Picking up the identified diamond having table down position;
- Submitting the diamond to a second detection means (30), comprising a first test (32) of a Raman Shift Detection (32a) or a Photoluminescence Detection (32b), followed by a second test (34) of a Raman Shift Detection (34a) or Photoluminescence Detection (34b), the second test (34) having a different laser wavelength than the first test (32), wherein when the first test (32) and the second test (34) are Raman Shift Detections (32a, 34a), the diamond is further submitted to a third test of Photoluminescence Detection;
- Sorting the diamond to a respective container (95).

13. The method according to claim 12, wherein the diamond is subjected to the second detection means (30) by subjecting to the first test (32) of Photoluminescence Detection (32b) and followed by the second test (34) of a Raman Shift Detection (34a) having different wavelength, or vice versa.

14. The method according to claim 12, wherein the diamond subjected to the second detection means (30) is first submitted to a first test (32) of Raman Shift Detection (32a) having a longer wavelength, followed by a second test (34) of Raman Shift Detection (34a) having a shorter wavelength, or vice versa, and followed by a third test of Photoluminescence Detection, or preferably, the diamond subjected to the second detection means (30) is first submitted to a first test (32) of Raman Shift Detection (32a) having a wavelength of more than 500 nm and the second test (34) of Raman Shift Detection (34a) having a wavelength of less than 500 nm, or vice versa, and followed by a third test of Photoluminescence Detection.

## Patentansprüche

1. Vorrichtung (100) zum automatischen Sortieren kleiner, farbloser, natürlicher Diamanten, von farblosen Diamantimitationen und farblosen, synthetischen Diamanten, wobei die Diamanten im Allgemeinen poliert sind und einen mittleren Durchmesser von weniger als 3,8 mm aufweisen, wobei die Vorrichtung umfasst:
- Einen Sammelbehälter (10) mit Vibration, in den die Diamanten eingefüllt werden, mit einer Vibrationsplatte (12) zum Rütteln der Diamanten;
- Eine erste Erkennungsvorrichtung (20) zum Erfassen der Position der Diamanten, wobei mindestens ein Diamant bestimmt wird, der eine «Tafel unten»-Position («having a table down position») hat;
- Eine zweite Erkennungsvorrichtung (30), um den Diamanten einer ersten Prüfung (32) einer Raman-Shift-Detektion (32a) oder einer Photolumineszenz-Detektion (32b) zu unterziehen, gefolgt von einer zweiten Prüfung (34) einer Raman-Shift-Detektion (34a) oder einer Photolumineszenz-Detektion (34b), wobei die zweite Prüfung (34) eine andere Laserwellenlänge als die erste Prüfung (32) aufweist;
- Eine Transport- und Sortiervorrichtung (40) zum Aufnehmen des Diamanten, der eine «Tafel unten»-Position («having a table down position») hat, zum Platzieren des Diamanten auf der zweiten Erkennungsvorrichtung (30) und zum anschließenden Sortieren des Diamanten in einen entsprechenden Behälter (95).

2. Vorrichtung (100) nach Anspruch 1, wobei die erste Erkennungsvorrichtung (20) ein Bildgebungssystem zum Erfassen und Verarbeiten von Bildern zum Identifizieren des aufzunehmenden Diamanten umfasst.

3. Vorrichtung (100) nach einem der vorherigen Ansprüche, wobei der Diamant, der der zweiten Erkennungsvorrichtung (30) unterzogen wird, zuerst einer ersten Prüfung mittels einer Raman-Shift-Detektion (32a) oder einer Photolumineszenz-Detektion (32b) mit einer längeren Wellenlänge unterzogen wird, gefolgt von einer zweiten Prüfung (34) einer Raman-Shift-Detektion (34a) oder einer Photolumineszenz-Detektion (34b) mit einer kürzeren Wellenlänge oder umgekehrt.

4. Vorrichtung (100) nach einem der vorherigen Ansprüche, wobei der Diamant, der der zweiten Erkennungsvorrichtung (30) unterzogen wird, einer ersten Prüfung (32) unterzogen wird, die eine erste Raman-Shift-Detektion (32a) oder Photolumineszenz-Detektion (32b) mit einer Wellenlänge von mehr als 500 nm ist, gefolgt von einer zweiten Prüfung (34), die eine zweite Raman-Shift-Detektion (34a) oder Photolumineszenz-Detektion (34b) mit einer Wellenlänge von weniger als 500 nm ist, oder umgekehrt.

5. Vorrichtung (100) nach einem der vorherigen Ansprüche, wobei der Diamant, der der zweiten Erkennungsvorrichtung (30) unterzogen wird, einer ersten Prüfung (32) unterzogen wird, bei der es sich um eine Photolumineszenzdetektion (32b) handelt, gefolgt von einer zweiten Prüfung (34), bei der es sich um eine Raman-Shift-Detektion (34a) handelt.

6. Vorrichtung (100) nach einem der vorherigen Ansprüche, die ferner eine Stützvorrichtung (50) zum Stützen der Transportvorrichtung (40) umfasst, wodurch sich die Transportvorrichtung (40) im Wesentlichen vertikal entlang der Stützvorrichtung (50) bewegen kann.

7. Vorrichtung (100) nach einem der Ansprüche 1 bis 5, die ferner einen Bewegungsmechanismus (52) umfasst, der an einer Stützvorrichtung (50) zum Stützen der Transportvorrichtung (40) vorgesehen ist, und es der Stützvorrichtung ermöglicht, sich in einer linearen Bewegung zu bewegen.

8. Vorrichtung (100) nach einem der Ansprüche 6 oder 7, wobei die Transportvorrichtung (40) einen Arm (42) umfasst, der um eine Mittelachse der Stützvorrichtung (50) drehbar ist.

9. Vorrichtung (100) nach einem der vorstehenden Ansprüche, wobei die Transportvorrichtung (40) mit einer Endvorrichtung zum Transportieren eines Diamanten mit einer Größe von etwa 0,45 mm oder weniger, vorzugsweise einer Saugvorrichtung, versehen ist.

10. Vorrichtung (100) gemäß einem der Ansprüche 1 bis 8, wobei eine Endvorrichtung an einem Arm (42) der Transportvorrichtung (40) vorgesehen ist, sodass der Diamant durch Klemmen, Greifen, Ansaugen, Schöpfen und/oder magnetisch transportiert wird.

11. Vorrichtung (100) nach einem der vorherigen Ansprüche, wobei die Transportvorrichtung (40) ausfahrbar und einfahrbar ist.

12. Verfahren zum automatischen Sortieren kleiner, farbloser, natürlicher Diamanten, von farblosen Diamantimitationen und farblosen, synthetischen Diamanten, wobei die kleinen Diamanten im Allgemeinen poliert sind und einen mittleren Durchmesser von weniger als 3,8 mm aufweisen, umfassend die folgenden Schritte:
- Bereitstellen einer Charge oder einer Vielzahl von zu prüfenden Diamanten auf einem Sammelbehälter (10) mit Vibration, der eine Vibrationsplatte (12) umfasst;
- Erschüttern der Vibrationsplatte (12), um die Diamanten zufällig zu positionieren;
- Den Diamanten einer ersten Erkennungsvorrichtung (20) zuführen zum Erfassen der Positionen der Diamanten, und Bestimmen mindestens eines Diamanten, der eine «Tafel unten»-Position hat («having a table down position»);
- Aufnehmen des identifizierten Diamanten, der eine «Tafel unten»-Position hat («having a table down position»);
- Unterziehen des Diamanten einer zweiten Erkennungsvorrichtung (30), die eine ersten Prüfung (32) einer Raman-Shift-Detektion (32a) oder einer Photolumineszenz-Detektion (32b) umfasst, gefolgt von einer zweiten Prüfung (34) einer Raman-Shift-Detektion (34a) oder einer Photolumineszenz-Detektion (34b), wobei die zweite Prüfung (34) eine andere Laserwellenlänge als die erste Prüfung aufweist, wobei, wenn die erste Prüfung (32) und die zweite Prüfung (34) Raman-Shift-Detektionen (32a, 34a) sind, der Diamant einer dritten Prüfung der Photolumineszenzdetektion unterzogen wird;
- Sortieren des Diamanten in einen entsprechenden Behälter (95).

13. Verfahren nach Anspruch 12, wobei der Diamant der zweiten Erkennungsvorrichtung (30) unterzogen wird, indem er der ersten Prüfung (32) der Photolumineszenzdetektion (32b) und anschließend der zweiten Prüfung (34) einer Raman-Shift-Detektion (34a) mit einer anderen Wellenlänge oder umgekehrt unterzogen wird.

14. Verfahren nach Anspruch 12, wobei der Diamant, der der zweiten Erkennungsvorrichtung (30) unterzogen wird, zunächst einer ersten Prüfung (32) der Raman-Shift-Detektion (32a) mit einer längeren Wellenlänge unterzogen wird, gefolgt von einer zweiten Prüfung (34) der Raman-Shift-Detektion (34a) mit einer kürzeren Wellenlänge oder umgekehrt, und anschließend einer dritten Prüfung der Photolumineszenz-Detektion, oder vorzugsweise der der zweiten Erkennungsvorrichtung (30) unterzogene Diamant zunächst einer ersten Prüfung (32) der Raman-Shift-Detektion (32a) mit einer Wellenlänge von mehr als 500 nm und der zweiten Prüfung (34) der Raman-Shift-Detektion (34a) mit einer Wellenlänge von weniger als 500 nm oder umgekehrt unterzogen wird, gefolgt von einer dritten Prüfung der Photolumineszenz-Detektion.

## Revendications

1. Appareil (100) destiné à trier automatiquement de petits diamants naturels incolores vis-à-vis d'imitations de diamants incolores et des diamants synthétiques incolores, les diamants étant généralement polis et ayant un diamètre moyen inférieur à 3,8 mm, l'appareil comprenant :
- un récipient vibrant de collecte (10) dans lequel les diamants sont introduits, comprenant une plaque vibrante (12) destinée à secouer les diamants ;
- des premiers moyens de détection (20) pour détecter la position des diamants, au moins un diamant ayant une position renversée étant déterminé ;
- des deuxièmes moyens de détection (30) pour soumettre le diamant à un premier test (32) de détection du décalage Raman (32a) ou de détection de photoluminescence (32b), suivi d'un deuxième test (34) de détection du décalage Raman (34a) ou de détection de photoluminescence (34b), le deuxième test (34) utilisant une longueur d'onde laser différente de celles du premier test (32) ;
- un moyen de transport et de tri (40) pour récupérer le diamant ayant une position renversée, placer le diamant vers le deuxième moyen de détection (30) et ensuite trier le diamant vers un conteneur respectif.

2. Appareil (100) selon la revendication 1, dans lequel le premier moyen de détection (20) comprend un système d'imagerie pour capturer et traiter des images afin d'identifier le diamant à ramasser.

3. Appareil (100) selon l'une quelconque des revendications précédentes, dans lequel le diamant soumis au deuxième moyen de détection (30) est d'abord soumis à un premier test de détection de décalage Raman (32a) ou de détection de photoluminescence (32b) ayant une longueur d'onde longue, suivi d'un deuxième test (34) de détection de décalage Raman (34a) ou de détection de photoluminescence (34b) ayant une longueur d'onde plus courte, ou vice versa.

4. Appareil (100) selon l'une quelconque des revendications précédentes, dans lequel le diamant soumis au deuxième moyen de détection (30) est soumis à un premier test (32) qui est une première détection de décalage Raman (32a) ou une détection de photoluminescence (32b) ayant une longueur d'onde supérieure à 500 nm, suivie d'un deuxième test (34) qui est une deuxième détection de décalage Raman (34a) ou une détection de photoluminescence (34b) ayant une longueur d'onde inférieure à 500 nm, ou vice versa.

5. Appareil (100) selon l'une quelconque des revendications précédentes, dans lequel le diamant soumis au deuxième moyen de détection (30) est soumis à un premier test (32) qui est une détection par photoluminescence (32b), suivi d'un deuxième test (34) qui est une détection par décalage Raman (34a).

6. Appareil (100) selon l'une quelconque des revendications précédentes, comprenant en outre un moyen de support (50) pour supporter le moyen de transport (40), permettant au moyen de transport (40) de se déplacer sensiblement verticalement le long du moyen de support (50).

7. Appareil (100) selon l'une quelconque des revendications précédentes, comprenant en outre un mécanisme mobile (52) prévu sur un moyen de support (50) pour supporter le moyen de transport (40), permettant au moyen de support de se déplacer selon un mouvement linéaire.

8. Appareil (100) selon l'une des revendications 6 ou 7, dans lequel le moyen de transport (40) comprend un bras (42) qui peut tourner autour d'un axe central du moyen de support (50).

9. Appareil (100) selon l'une quelconque des revendications précédentes, dans lequel le moyen de transport (40) est muni d'un moyen d'extrémité pour transporter un diamant d'une taille d'environ 0,45 mm ou moins, de préférence un moyen d'aspiration.

10. Appareil (100) selon l'une des revendications 1 à 8, dans lequel un moyen d'extrémité est prévu sur un bras (42) du moyen de transport (40) de telle sorte que le diamant soit transporté par serrage, préhension, aspiration, ramassage et/ou magnétisme.

11. Appareil (100) selon l'une quelconque des revendications précédentes, dans lequel le moyen de transport (40) est extensible et rétractable.

12. Procédé de tri automatique de petits diamants naturels incolores vis-à-vis d'imitations de diamants incolores et de diamants synthétiques incolores, les petits diamants étant généralement polis et ayant un diamètre moyen inférieur à 3,8 mm, comprenant les étapes suivantes
- fournir un lot ou une série de diamants à inspecter sur un récipient vibrant collecteur (10) comprenant une plaque vibrante (12) ;
- secouer la plaque vibrante (12) pour positionner les diamants de manière aléatoire ;
- soumettre les diamants à un premier moyen de détection (20) pour détecter les positions des diamants et déterminer au moins un diamant ayant une renversée ;
- sélectionner le diamant identifié dont la position est renversée ;
- soumettre le diamant à un deuxième moyen de détection (30), comprenant un premier test (32) de détection du décalage Raman (32a) ou de détection de photoluminescence (32b), suivi d'un deuxième test (34) de détection du décalage Raman (34a) ou de détection de photoluminescence (34b), le deuxième test (34) ayant une longueur d'onde laser différente de celle du premier test (32), dans lequel, lorsque le premier test (32) et le deuxième test (34) sont des détections de décalage Raman (32a, 34a), le diamant est ensuite soumis à un troisième test de détection de photoluminescence ;
- trier et acheminer le diamant vers un conteneur respectif.

13. Procédé selon la revendication 12, dans lequel les diamants sont soumis au deuxième moyen de détection (30) en étant soumis au premier test (32) de détection par photoluminescence (32b), suivi du deuxième test (34) de détection par décalage Raman (34a) ayant une longueur d'onde différente, ou vice versa.

14. Procédé selon la revendication 12, dans lequel le diamant soumis au deuxième moyen de détection (30) est d'abord soumis à un premier test (32) de détection du décalage Raman (32a) ayant une longueur d'onde longue, suivi d'un deuxième test (34) de détection du décalage Raman (34a) ayant une longueur d'onde plus courte, ou vice versa, puis à un troisième test de détection de photoluminescence, ou de préférence, le diamant soumis au deuxième moyen de détection (30) est d'abord soumis à un premier test (32) de détection du décalage Raman (32a) ayant une longueur d'onde supérieure à 500 nm et au deuxième test (34) de détection du décalage Raman (34a) ayant une longueur d'onde inférieure à 500 nm, ou vice versa, et suivi d'un troisième test de détection de photoluminescence.
